(19) **Europäisches Patentamt / European Patent Office / Office européen des brevets**

(11) **EP 2 784 967 B1**

(12) **FASCICULE DE BREVET EUROPEEN**

(45) Date de publication et mention de la délivrance du brevet:
**21.10.2015 Bulletin 2015/43**

(51) Int Cl.:
*H04L 1/16* (2006.01)  *H04L 1/00* (2006.01)
*H04L 1/20* (2006.01)  *H04L 1/18* (2006.01)

(21) Numéro de dépôt: **14160837.2**

(22) Date de dépôt: **20.03.2014**

(54) **Système de communication coopératif a stratégie de retransmission de paquets adaptative**

Kooperatives Kommunikationssystem mit Strategie zur adaptiven Rückübertragung von Datenpaketen

Cooperative communication system with adaptive packet retransmission strategy

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2013 FR 1352522**

(43) Date de publication de la demande:
**01.10.2014 Bulletin 2014/40**

(73) Titulaire: **Commissariat à l'Énergie Atomique et aux Énergies Alternatives 75015 Paris (FR)**

(72) Inventeurs:
• **Maret, Luc**
  **38210 Polienas (FR)**
• **Ktenas, Dimitri**
  **38340 VOREPPE (FR)**

(74) Mandataire: **Ilgart, Jean-Christophe et al BREVALEX 95, rue d'Amsterdam 75378 Paris Cedex 8 (FR)**

(56) Documents cités:
**WO-A1-2008/153308   WO-A2-2012/109725**
**US-A1- 2008 155 148   US-A1- 2011 170 450**
**US-A1- 2011 273 981**

• **BIN ZHAO ET AL: "Practical relay networks: a generalization of hybrid-ARQ", IEEE JOURNAL ON SELECTED AREAS IN COMMUNICATIONS, IEEE SERVICE CENTER, PISCATAWAY, US, vol. 23, no. 1, 1 janvier 2005 (2005-01-01), pages 7-18, XP011433737, ISSN: 0733-8716, DOI: 10.1109/JSAC.2004.837352**

**Description**

## DOMAINE TECHNIQUE

La présente invention concerne de manière générale les systèmes de communication de type coopératif. Elle peut notamment s'appliquer dans les systèmes de type OFDMA (Orthogonal Frequency Division Multiple Access) par exemple dans les systèmes de télécommunications WiMAX (IEEE 802.16m), 3GPP-LTE ou LTE-Advanced. Elle trouve également application dans le domaine des réseaux de capteurs où l'information peut être véhiculée par plusieurs émetteurs.

L'invention vise plus précisément un procédé de retransmission de paquets erronés adapté à un contexte de transmission avec relais coopératifs dans lequel est en outre possible l'encodage de l'information de manière distribuée entre un terminal source et un terminal relais.

## ÉTAT DE LA TECHNIQUE ANTÉRIEURE

Les systèmes de communication sans fil de type coopératif sont typiquement utilisés dans le cadre de communications cellulaires pour lesquelles les communications avec les utilisateurs en bordure de cellule sont difficiles (grande portée, interférences avec les cellules adjacentes, etc.). Ils sont ainsi connus pour offrir une couverture plus importante et une moindre susceptibilité aux évanouissements (*fading*) que les systèmes cellulaires classiques.

Dans une première étape (non sujette à cette invention), un relais est associé à chaque utilisateur ayant besoin de renforcer la qualité de son lien avec la station de base, dans le but de proposer une qualité de service homogène dans toute la cellule.

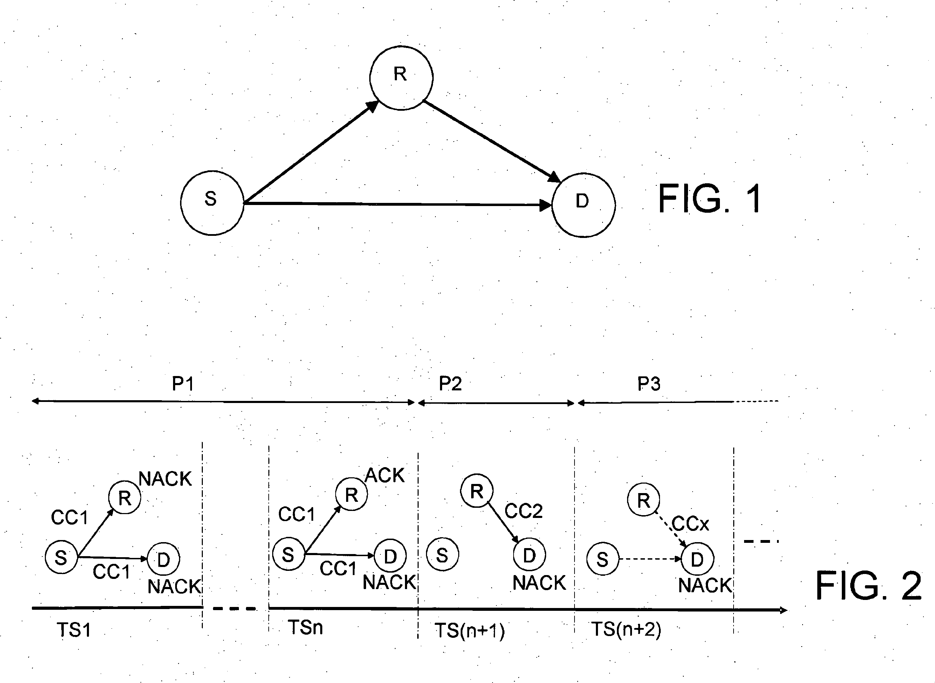

On a représenté schématiquement sur la figure 1 une stratégie de coopération dans un tel système constitué d'un terminal source S, d'un terminal relais R et d'un terminal destinataire D. Le terminal source S transmet un flux de données à un terminal relais R. Le terminal relais R reçoit le flux de données et le retransmet, après l'avoir éventuellement décodé et recodé (le terminal relais est alors du type DF pour *Decode and Forward*), au terminal destinataire D. Cette stratégie permet au terminal source S, par exemple une station de base d'un réseau cellulaire, d'atteindre le terminal destinataire D lorsque le trajet S-D n'est pas en ligne directe à cause de la présence d'un obstacle entre le terminal source S et le terminal destinataire D, ou si la distance entre le terminal source S et le terminal destinataire D excède la portée de la station de base.

Un protocole de transmission coopérative mettant en oeuvre deux phases de transmission consécutives est par exemple le suivant. Dans une première phase de transmission, le terminal source S transmet aux terminaux relais R et destinataire D. Dans une seconde phase de transmission, le terminal relais R retransmet au terminal source S, après encodage et recodage quand il est du type DF.

L'encodage de la transmission du paquet depuis le terminal source et le terminal relais peut par ailleurs être du type distribué, tel que du type Turbo-Codes Distribués (TCD). Un TCD est un mécanisme qui distribue entre la source et le relais l'encodage d'un Turbo-Code Convolutif (TCC) généralement constitué de deux encodeurs convolutifs dont un premier encodeur code des bits d'un paquet de données et le second encodeur code les bits du même paquet de données mais préalablement entrelacés. Un mécanisme de TCD va donc consister à faire transmettre dans un premier temps par le terminal source les données d'un paquet encodées à l'aide du premier encodeur. Le terminal relais reçoit ces données, les décode, vient les entrelacer puis les encoder par le second encodeur. Ainsi le terminal destinataire reçoit les données du paquet encodées par les deux encodeurs, et peut ainsi bénéficier d'un décodage performant de type itératif.

On connaît par ailleurs les protocoles de demande de retransmission ARQ (*Automatic Repeat reQuest*) et HARQ (*Hybrid ARQ*) dans les systèmes de télécommunication point à point. Dans le cas d'un ARQ, des bits redondants sont ajoutés aux données à transmettre pour permettre au récepteur de détecter d'éventuelles erreurs de transmission, par exemple au moyen d'un contrôle de redondance cyclique (ou CRC pour *Cyclic Redundancy Check*). Si le récepteur détecte une erreur de transmission, il peut demander la retransmission des données à l'émetteur. Dans le cas d'un HARQ, les données sont en outre encodées au moyen d'un code correcteur d'erreur, tel que le code FEC (*Forward Error Correction*), qui ajoute également des bits redondants aux données originales et qui permet de corriger un certain nombre d'erreurs sans retransmission. Si le nombre d'erreurs est trop élevé pour être corrigé par le FEC, le récepteur transmet un acquittement négatif (*NACK* pour *Non-ACKnowledge*) à l'émetteur afin de demander la retransmission.

La demande internationale WO 2008/024158 décrit un protocole HARQ assisté par relais. Selon ce protocole, si le terminal destinataire n'arrive pas à décoder les données reçues du terminal source lors d'un premier intervalle de transmission, le terminal source retransmet les données lors d'un second intervalle de transmission. En parallèle, si le terminal relais a pu décoder les données reçues lors du premier intervalle de transmission, celui-ci retransmet les données au terminal destinataire pendant le second intervalle de transmission. A défaut, le terminal relais reste silencieux pendant ce second intervalle. On comprend ainsi que le terminal relais, et donc la diversité spatiale et/ou la diversité de codage qu'il apporte n'est prise en compte que si la première transmission a échoué.

On connaît par ailleurs de K. Pang, "Collaborative HARQ Schemes for Cooperative Diversity Communications in Wireless Networks", Master Thesis, The University of Sydney School of Electrical & Information Engineering, 2008, (http://ses.library.usyd.edu.au/handle/2123/2559) un protocole de demande de retransmission pour réseau coopératif dans lequel la source et le relais retransmettent alternativement jusqu'à ce que le message original ait été décodé avec succès ou jusqu'à ce qu'un nombre maximum autorisé de retransmission ait été atteint.

Dans ce cadre, l'invention a pour objectif de proposer un mécanisme de retransmission HARQ plus élaboré, à même d'optimiser les ressources nécessaires à la bonne retransmission en fonction de la qualité des liens, notamment afin de réduire la consommation en ressources spectrales et/ou temporelles. L'invention a en particulier pour objectif de proposer un mécanisme HARQ dans lequel une technique de codage distribué serait intégrée.

Le document WO 2012/109725 A2 décrit un système de communication coopératif dans lequel à la fois le terminal relais et le terminal source viennent retransmettre leurs données lorsqu'elles n'ont été correctement décodées par un terminal destinataire, sans qu'il n'y ait une sélection de l'un et/ou l'autre du terminal relais et du terminal source en fonction d'une évaluation de la fiabilité des canaux de transmission.

Le document US 2008/155148 A1 fournit un autre exemple de système coopératif mettant en oeuvre un encodage distribué.

EXPOSÉ DE L'INVENTION

L'invention propose pour ce faire un procédé tel que défini par la revendication 1.

L'invention s'étend également à un réseau coopératif de communication dans lequel les terminaux sont configurés pour mettre en oeuvre le procédé selon le premier aspect de l'invention, ainsi qu'à un terminal destinataire d'un tel réseau coopératif de communication.

BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outre la figure 1 déjà discutée précédemment :

- la figure 2 est un schéma illustrant le duplexage par division temporelle des transmissions et retransmissions réalisées dans le cadre de l'invention ;
- la figure 3 est un organigramme illustrant les différentes étapes d'un procédé selon un mode de réalisation possible de l'invention ;
- les figures 4-6 sont des résultats de simulation illustrant les performances obtenues par le procédé selon l'invention.

EXPOSÉ DÉTAILLÉ DE MODES DE RÉALISATION PARTICULIERS

Nous considérerons dans la suite un système de télécommunication coopératif, encore dénommé réseau coopératif, comprenant un terminal source S, au moins un terminal relais R, et un terminal destinataire D. L'expression " terminal source " doit être prise au sens large, l'invention pouvant s'appliquer notamment au cas où une station de base transmet des données au terminal d'un utilisateur sur sa liaison descendante. De la même façon, l'expression " terminal destinataire" doit être comprise au sens large, l'invention pouvant s'appliquer notamment au cas où le terminal d'un utilisateur transmet des données à une station de base sur sa liaison montante. Dans les deux cas indiqués, les données sont relayées par le terminal relais, soit vers la station de base pour la liaison montante, soit vers le terminal de l'usager pour la liaison descendante. On entendra ici l'expression " terminal relais " au sens large, celle-ci pouvant couvrir aussi bien un terminal mobile qu'une station de base servant de relais.

Nous supposerons dans la suite que le système de télécommunication coopératif utilise de préférence, mais non nécessairement, des ressources de transmission fréquentielles. L'invention sera illustrée de manière non limitative par un système de type OFDMA. Dans un tel système, les ressources fréquentielles sont des intervalles de sous-porteuses d'un multiplex OFDM, chaque terminal pouvant se voir allouer une telle ressource pendant un intervalle de transmission (allocation dynamique ou *dynamic scheduling*) ou bien pendant une succession de tels intervalles (*semi-persistent scheduling*).

Les canaux de transmission seront supposés être de type à évanouissements par bloc (*block fading channel*). De manière générale, dans un canal à évanouissements par blocs, un message à transmettre, par exemple un mot de code, "voit" une pluralité d'instances de canal. Ces instances peuvent être temporelles et/ou fréquentielles selon que le canal est sélectif en temps ou en fréquence. Dans le cas particulier d'un système OFDMA, les instances de canal vues par un mot de code sont des intervalles de sous-porteuses (*frequency chunks*) subissant sensiblement le même évanouissement.

L'invention fait l'hypothèse d'un canal de transmission quasi invariant dans le temps (mobilité faible). Ainsi, il est nécessaire, en cas de transmission de type OFDMA, que les mêmes blocs de ressources physiques (pavés temps/fréquence) soient réutilisés lors des retransmissions ou tout du moins que les blocs de ressources physiques appartiennent à la même bande fréquentielle de cohérence.

L'idée à la base de l'invention est d'exploiter la connaissance du décodage correct ou incorrect du paquet reçu au terminal relais, ainsi qu'une information sur la fiabilité des liens entre le terminal source et le terminal destinataire d'une part et entre le terminal relais et le terminal destinataire d'autre part, afin de sélectionner le terminal (source/relais) qui devra réaliser la retransmission vers le terminal destinataire en cas de décodage incorrect. Dans le cadre d'un codage distribué, de type Turbo-Codes Distribués par exemple, on vient également définir quel type d'encodeur sera utilisé par le terminal sélectionné.

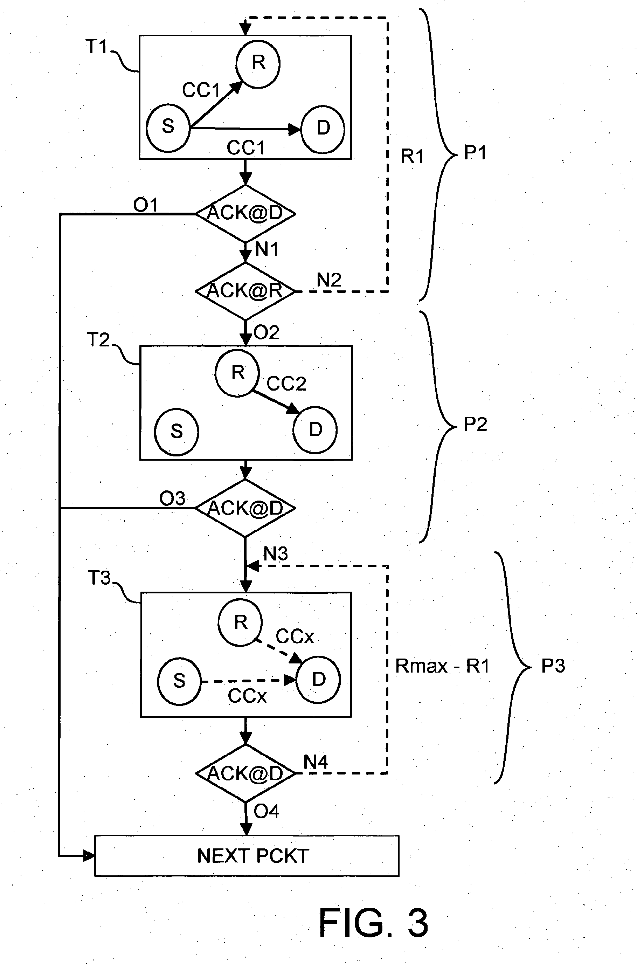

En référence aux figures 2 et 3, on a représenté un mode de réalisation du procédé selon l'invention de transmission d'une séquence composée d'une pluralité de paquets de données dans un réseau coopératif comprenant une pluralité de noeuds dont un terminal source S, un terminal destinataire D et un terminal relais R. Dans ce procédé, le duplexage entre les transmissions du terminal source S et celles du terminal relais R est assuré par division temporelle et comprend dans une première transmission T1 sur un intervalle de temps TS1 d'une première phase P1 du procédé, la transmission des données d'un paquet par le terminal source S à la fois au terminal relais R et au terminal destinataire D. Ces données sont typiquement encodées par le terminal source à l'aide d'un premier encodeur CC1.

On vérifie ensuite (« ACK@D » sur la figure 3) si le terminal destinataire a correctement décodé les données du paquet de la première transmission T1.

En cas de réussite (« O1 »), le terminal destinataire D génère et transmet au terminal source S et au terminal relais R un message de confirmation du décodage ACK (acquittement positif). Puis on passe à la transmission du paquet de données suivant dans la séquence (« NEXT PCKT »).

En cas d'échec (« N1 »), le terminal destinataire D génère et transmet au terminal source S et au terminal relais R un message d'infirmation du décodage NACK (acquittement négatif). On vient ensuite vérifier (« ACK@R ») si le terminal relais a correctement décodé les données du paquet de la première transmission T1. En cas d'échec (« N2 ») du décodage des données du paquet de la première transmission à la fois par le terminal destinataire D et par le terminal relais R, le terminal source S réitère la première transmission T1 sur plusieurs intervalles de temps (TSn sur la figure 2).

Tant que le terminal destinataire D ne décode pas correctement les données du paquet (NACK sur la figure 2), et dès que les données du paquet sont correctement décodées par le terminal relais R (ACK sur la figure 2, à l'issue de la n-ième première transmission T1 ; « O2 » sur la figure 3), le procédé comprend dans une deuxième transmission T2 sur un intervalle de temps TS(n+1) d'une deuxième phase P2, la transmission des données du paquet par le terminal relais R vers le terminal destinataire D. Ces données correspondent typiquement aux données reçues du terminal source, après décodage, entrelacement des données décodées pour former un paquet de données entrelacées et encodage du paquet de données entrelacées à l'aide du second encodeur CC2 en vue de la deuxième transmission.

On relèvera que la réitération de la première transmission T1 peut être bornée à R1 itérations. Si à l'issue de ces R1 itérations, ni le terminal destinataire D, ni le terminal relais R n'a correctement décodé les données du paquet, on abandonne la transmission du paquet et on passe à la transmission du paquet suivant dans la séquence

On vérifie ensuite (« ACK@D » sur la figure 3) si le terminal destinataire D a correctement décodé les données du paquet de la seconde transmission T2.

En cas de réussite (« 03 »), le terminal destinataire D génère et transmet au terminal source S et au terminal relais R un message de confirmation du décodage ACK (acquittement positif). Puis on passe à la transmission du paquet de données suivant dans la séquence (« NEXT PCKT »).

En cas d'échec (« N3 »), le terminal destinataire D génère et transmet au terminal source S et au terminal relais R un message d'infirmation du décodage NACK (acquittement négatif). On vient alors sélectionner le terminal source S et/ou le terminal destinataire D pour retransmission dans une troisième transmission T3 des données du paquet sur un intervalle de temps TS(n+2) d'une troisième phase P3 à destination du terminal destinataire D. Les données du paquet qui sont retransmises dans une troisième transmission T3 peuvent être soit les données du paquet de la première transmission (c'est-à-dire les données encodées par le premier encodeur CC1) soit les données du paquet de la seconde transmission (c'est-à-dire les données entrelacées et encodées par le second encodeur CC2).

Tant que le terminal destinataire ne décode pas correctement les données du paquet de la troisième transmission T3 (« ACK@D » et « N4 » sur la figure 3), on réitère la troisième transmission T3 par l'un et/ou l'autre du terminal source S et du terminal destinataire D. En cas d'échec du décodage, le terminal destinataire D génère et transmet au terminal source S et au terminal relais R un message d'infirmation du décodage NACK.

En cas de réussite du décodage des données du paquet de la troisième transmission par le terminal destinataire (« 04 »), le terminal destinataire génère et transmet au terminal source S et au terminal relais R un message de confirmation du décodage ACK et on passe à la transmission du paquet de données suivant dans la séquence.

On relèvera que la réitération de la troisième transmission est bornée à (Rmax-R1) itérations. Si à l'issue de

**4**

ces itérations, le terminal destinataire D n'a pas correctement décodé les données du paquet, on abandonne la transmission du paquet et on passe à la transmission du paquet suivant dans la séquence.

Dans le cadre de l'invention, la sélection du terminal relais et/ou du terminal source pour une troisième transmission T3 est basée sur une évaluation de la fiabilité pour ladite troisième transmission du canal de transmission entre le terminal source et le terminal destinataire et du canal de transmission entre le terminal relais et le terminal destinataire.

On vient plus précisément diagnostiquer si un canal de transmission pouvant participer à la troisième transmission est suffisamment fiable en ce sens qu'il sera possible de corriger au niveau de terminal destinataire D les données d'un paquet ayant été transmis sur ce canal.

On rappelle ici que les canaux de transmission sont supposés être de type à évanouissements par bloc (*block fading channel*). Comme un tirage particulier d'instances du canal de propagation possède un nombre fini d'état, le canal est non-ergodique, et il admet une capacité de Shannon nulle. La capacité au sens de Shannon, exprimée comme moyenne de l'information mutuelle sur toutes les instances du canal, n'est pas une grandeur pertinente pour caractériser un canal non ergodique tel qu'un canal radio. On a alors recours aux notions de coupure et de probabilité de coupure introduites par E. Biglieri et al. dans son article intitulé " Fading channels information-theoretic and communication aspects " publié dans IEEE Trans. on Information Theory, vol. 44, n°6, Oct. 1998, pages 2619-2692.

De manière générale, le canal radio est caractérisé en un instant donné par l'information mutuelle instantanée de ce canal, le caractère instantané se référant à l'instance du canal que l'on considère.

La probabilité de coupure d'un canal est définie comme la probabilité que l'information mutuelle instantanée de ce canal pour une certaine réalisation d'évanouissement soit inférieure au débit d'information demandé à transmettre sur ce canal. Si l'on note I l'information mutuelle instantanée du canal, ce dernier sera en situation de coupure si R > I où R est le débit binaire de transmission. Dès lors que le canal est en situation de coupure, il ne sera pas possible de corriger un paquet de données ayant été transmis sur ce canal. Qui plus est, toute retransmission de ce paquet pendant le temps de cohérence du canal (c'est-à-dire pendant le laps de temps où l'on peut considérer que son coefficient d'atténuation a peu varié) sera également voué à l'échec.

On peut ainsi exprimer la probabilité de coupure $P_{out}$ selon :

$$P_{out} = \Pr(I(\gamma,\alpha) < R),$$ où I($\gamma$,$\alpha$) est une variable aléatoire représentant l'information mutuelle instantanée pour une instance donnée du canal $\alpha$, et y est le ratio signal à bruit instantané.

Pour un codage canal générique C, en assumant un décodage de type maximum de vraisemblance, il est possible d'exprimer la probabilité d'une erreur de paquet pour le code C comme suit :

$$P_e^C(\gamma) = P_{e|out}^C(\gamma)P_{out}^C(\gamma) + P_{e|\overline{out}}^C(\gamma)\left(1 - P_{out}^C(\gamma)\right)$$

où $P_{e|out}^C(\gamma)$ et $P_{e|\overline{out}}^C(\gamma)$ sont respectivement les probabilités d'erreur paquet lorsque la transmission est en coupure et lorsqu'elle ne l'est pas. Pour des codes atteignant la capacité, l'équation précédente admet une borne supérieure proche définie comme suit:

$$P_e^C(\gamma) \underset{\approx}{<} P_{out}^C(\gamma) + \underbrace{P_{e|\overline{out}}^C(\gamma)\left(1 - P_{out}^C(\gamma)\right)}_{P_{noise}^C(\gamma)}$$

Il est ainsi possible de distinguer deux composantes de la probabilité d'erreur paquet : la coupure due aux instances de canal, et celle due au bruit additif. En conséquence, quand une retransmission est requise, si un lien est en coupure, cela n'a aucun sens de retransmettre sur le même lien. Au contraire, si la transmission n'est pas en coupure, l'erreur paquet est alors due à une réalisation non favorable du bruit additif, et ainsi le même canal peut être réutilisé pour la retransmission.

La détection de la coupure d'un canal est basée sur le calcul de l'information mutuelle instantanée associée à la transmission qui a échoué sur le canal en question (par exemple du relais à la destination ou de la source à la destination) :

$$I(\gamma,\alpha) = \frac{1}{n_{\hat{c}}} \sum_{i=1}^{n_c} I_i\left(\left|\alpha_i\right|^2, \sigma^2\right)$$

Où

$$I_i\left(\left|\alpha_i\right|^2, \sigma^2\right) = \log_2(M) - \frac{1}{M} \sum_{k=1}^{M} E_z\left[\log_2\left(\sum_{q=1}^{M} A_{i,k,q}\right)\right]$$

et

$$A_{i,k,q} = \exp\left(-\frac{\left|\alpha_i a_k + z - \alpha_i a_q\right|^2 - \left|z\right|^2}{2\sigma^2}\right)$$

L'équation précédente est dérivée du mémoire de thèse de K.Pang discuté précédemment, où a est le vecteur du signal transmis direct complexe ou réel. Toute l'information requise peut être directement disponible au récepteur :

- M (ordre de modulation) et R (rendement de codage) sont connus car le schéma de modulation et codage est connu au récepteur;
- Les évanouissements de canal $\alpha_i$ et la variance du bruit additif $\sigma^2$ peuvent être connus au récepteur en utilisant de manière connue en soi une estimation de canal utilisant une détection de symboles pilotes insérés dans la trame de données ;
- a est connu du démodulateur au récepteur,
- z est le vecteur d'échantillons de bruit Gaussien additif de moyenne nulle et de variance $\sigma^2$.

L'information mutuelle instantanée est calculée sur $n_c$ sous-porteuses sur lesquelles le paquet est transmis. La complexité introduite au récepteur est faible car en pratique l'information mutuelle instantanée peut être calculée facilement à l'aide de tables préenregistrées ou par expansion polynomiale. Plus précisément, pour chaque valeur discrète de la variance de bruit on calcule par simulation l'information mutuelle instantanée correspondante. Ces valeurs peuvent être alors directement stockées dans une table ou LUT (Look Up Table). Alternativement, on peut déduire de ces valeurs les coefficients d'une approximation polynomiale de $I_i$ en fonction de $\sigma^2$ et stocker les coefficients ainsi calculés dans une table.

Une fois l'information mutuelle instantanée estimée au terminal destinataire pour chaque lien menant à lui (Source-Destination et Relais-Destination), plusieures variantes sont possibles pour sélectionner qui du terminal source et/ou du terminal relais va retransmettre, suivant que l'on se donne la possibilité ou non de prédire une coupure totale de la transmission après le nombre maximal (Rmax-R1) de retransmissions autorisé.

Dans chacune de ces variantes, et dans le but de sélectionner le terminal (source et/ou relais) qui va retransmettre, la probabilité de coupure est calculée pour évaluer la qualité des liens Source-Destination et Relais-Destination et pour évaluer si la retransmission va échouer. Le terminal destinataire décide quel terminal va retransmettre (source et/ou relais), et du type de données (retransmission sous une même forme ou sous une forme différente des données du paquet, la forme étant fonction du codeur constituant utilisé) à retransmettre. Les messages d'acquittement ACK/NACK diffusés par le terminal destinataire au terminal source et au terminal relais, notamment ceux consécutifs à une seconde transmission T2 et ceux consécutifs à une troisième transmission T3, contiennent cette information (soit choix du terminal de retransmission et choix du codeur constituant à utiliser, soit décision d'arrêt des retransmissions comme cela détaillé par la suite).

Dans une première variante ne faisant pas partie de l'invention, pour estimer s'il y a une coupure à venir, on calcule uniquement l'information mutuelle avec les transmissions précédentes et celles à venir, toujours en supposant que le canal de propagation n'aura pas varié. Cette information mutuelle est relative à l'intervalle de temps TS(n+i) de la troisième phase P3 sur la figure 2, et elle est estimée en ayant sélectionné à la fois le terminal source S et le terminal relais R pour procéder à la retransmission à venir de type T3, comme détaillé dans l'équation suivante :

$$I_{n+i} = I\left((n+i-1).\gamma_{SD}, \alpha_{SD}\right) + I\left(i.\gamma_{RD}, \alpha_{RD}\right)$$

où les indices *SD,* respectivement RD, désignent les canaux de transmission du terminal source, respectivement du terminal relais, vers le terminal destinataire.

Pour décider quels terminaux vont retransmettre et avec quelles données, on vérifie tout d'abord si, en cas de retransmission uniquement par le terminal relais R, le canal de transmission entre le terminal relais et le terminal destinataire est en coupure. Si c'est le cas, les données qui seraient réémises par le terminal relais ne pourraient être décodées sans erreur par le terminal destinataire. A contrario, en l'absence de coupure, la capacité du canal est jugée suffisante, on sélectionne alors le terminal relais R et on procède à la retransmission, dans une troisième transmission T3, des données du paquet par le terminal relais R.

En présence d'une coupure par retransmission par le seul terminal relais, on vient ensuite vérifier si, en cas de retransmission uniquement par le terminal source, le canal de transmission entre le terminal relais et le terminal destinataire est en coupure. En l'absence de coupure, la capacité du canal est jugée suffisante, on sélectionne le terminal source S et on procède alors à la retransmission, dans une troisième transmission T3, des données du paquet par le terminal source S. A contrario, on sélectionne à la fois le terminal source S et le terminal relais R pour procéder à la retransmission de type T3.

Dans une seconde variante faisant partie de l'invention, on estime s'il y a « coupure totale », c'est-à-dire si même après le nombre maximal de retransmissions, le système sera toujours en coupure, en ayant sélectionné à la fois le terminal source S et le terminal relais R pour procéder à toutes les retransmissions possibles de type T3. Cette « coupure totale » est estimée selon le calcul d'information mutuelle détaillé dans l'équation suivante :

$$I_{tot} = I(R\max.\gamma_{SD}, \alpha_{SD}) + I((R\max - R1 + 1).\gamma_{RD}, \alpha_{RD})$$

S'il y a « coupure totale », on prend la décision d'abandonner le paquet et de passer à la transmission du paquet suivant. S'il n'y a pas coupure totale, on regarde ensuite dans quelle configuration les retransmissions aboutissent à un système sans coupure, en forçant le(s) même(s) noeud(s) pour toutes les retransmissions. En d'autres termes, s'il n'y a pas coupure totale, on regarde s'il y a coupure en utilisant seulement le terminal relais pour toutes les retransmissions. Si ce cas mène à une coupure, on regarde ensuite avec des retransmissions par le terminal source. Si ce cas donne aussi un cas de coupure, on décide de retransmettre avec le terminal relais et le terminal source. Les différentes étapes de ce second mode de réalisation sont les suivantes.

On vérifie tout d'abord si, en cas de retransmission uniquement par le terminal relais R, le canal de transmission entre le terminal relais et le terminal destinataire est en coupure. En l'absence de coupure, la capacité du canal est jugée suffisante, on sélectionne le terminal relais R et on procède alors à la retransmission, dans une troisième transmission T3, des données du paquet par le terminal relais R.

En présence d'une coupure par retransmission par le seul terminal relais, on vient ensuite vérifier si, en cas de retransmission uniquement par le terminal source, le canal de transmission entre le terminal relais et le terminal destinataire est en coupure. En l'absence de coupure, la capacité du canal est jugée suffisante, on sélectionne le terminal source S et on procède alors à la retransmission, dans une troisième transmission T3, des données du paquet par le terminal source S

En présence d'une coupure par retransmission par le seul terminal source, on vient vérifier s'il y a coupure totale en cas de retransmission à la fois par le terminal source S et par le terminal relais R. En l'absence de coupure totale, on sélectionne le terminal source S et le terminal relais R et on procède alors à la retransmission, dans une troisième transmission T3, des données du paquet par le terminal source S et par le terminal relais. En présence d'une coupure totale, on abandonne le paquet et on passe à la transmission du paquet suivant.

Dans chacune de ces variantes, le terminal destinataire indique le type de données à retransmettre.

Dans un premier mode de réalisation, les données du paquet sont retransmises à l'identique. En d'autres termes, si le terminal relais est sélectionné, les données correspondent aux données du paquet reçues dans la première transmission T1, décodées, entrelacées et encodées à l'aide du second encodeur CC2. Si le terminal source est sélectionné, les données correspondent aux données du paquet encodées à l'aide du premier encodeur CC1.

Dans un second mode de réalisation, on réalise une retransmission de l'autre version des données du paquet (données encodées par le premier encodeur conformes à la première transmission T1, ou données entrelacées et encodées par le second encodeur conformes à la seconde transmission). A titre d'exemple, si le terminal relais est sélectionné pour une retransmission T3, alors le terminal relais ne procédera pas à l'entrelacement des données reçues à la première transmission T1 et décodées, et les encodera avec le premier encodeur CC1 pour transmission au terminal destinataire. Si le terminal source est sélectionné, il procède à l'entrelacement des données et à leur encodage à l'aide du second encodeur CC2 pour transmission au terminal destinataire. Cette variante permet de profiter de la diversité des canaux sur chaque paquet encodé.

Dans un troisième mode de réalisation, préférentiellement mise en oeuvre lorsque l'on cherche à optimiser la diversité et la fiabilité des données sur chaque entrée des deux décodeurs du terminal destinataire, on procède à une retransmission en alternance de chaque version des données du paquet, peu importe qui du terminal relais et/ou du terminal source est sélectionné.

Ces précédents modes de réalisation sont préférables dans le cas où le critère prépondérant est le coût ou la consommation énergétique côté destination.

Dans un quatrième mode de réalisation, on peut également venir limiter le nombre de retransmissions d'une version des données du paquet, le nombre maximal étant fonction de la fiabilité des données reçues précédemment par chacun des deux décodeurs convolutifs. En d'autres termes, on vient typiquement demander la retransmission du codeur le moins fiable au niveau du récepteur. Ce mécanisme s'avère d'autant plus intéressant que le nombre maximal de retransmissions est élevé.

On a pris dans ce qui précède l'exemple de turbo-codes distribués. Ainsi le terminal destinataire s'étend aussi bien à un terminal capable de recevoir, démoduler et décoder les données provenant d'un seul terminal (décodage de canal simple de type Viterbi) qu'à un terminal capable de recevoir, démoduler et décoder les données provenant de deux terminaux utilisant un codage distribué (décodage de type itératif). A chaque nouvelle retransmission reçue au terminal destinataire, les données reçues de ladite retransmission sont recombinées avec les données reçues des précédentes transmissions. Cette recombinaison est réalisée par la sommation des différentes versions reçues des entrées de chaque décodeur constituant le turbo-décodeur dans le terminal destination (méthode de Combining).

L'invention n'est toutefois pas limitée à cet exemple de réalisation, mais s'étend par exemple également à la transmission de turbo-codes complets du terminal source et/ou du terminal relais. En cas d'utilisation de turbo-codes complets lors de la première phase de transmission, le terminal source peut donc envoyer les données encodées par le premier encodeur CC1 et les données encodées par le deuxième encodeur CC2. En cas d'échec (« N1 ») du décodage des données du paquet de la première transmission par le terminal destinataire D, et en cas de succès (« O2 ») du décodage des données de la première transmission par le terminal relais R, le terminal relais R peut aussi retransmettre, dans une deuxième transmission T2 au terminal destinataire D, les données encodées par le premier encodeur CC1 et les données encodées par le deuxième encodeur CC2. En cas d'échec (« N3 ») du décodage des données du paquet de la deuxième transmission T2 par le terminal destinataire D, le terminal destinataire sélectionne le terminal source et/ou le terminal relais pour retransmettre et le type d'encodeur à employer (premier encodeur CC1 seul, deuxième encodeur CC2 seul ou turbo-codes complets), pour une retransmission de type T3, la sélection pouvant être basée sur une évaluation de la fiabilité pour ladite retransmission T3 du canal de transmission entre le terminal source et le terminal destinataire et du canal de transmission entre le terminal relais et le terminal destinataire.

On aura compris que l'invention permet, en estimant la qualité des liens, de ne choisir que les liens nécessaires à la bonne retransmission du paquet, et le cas échéant la manière dont ils doivent retransmettre leur paquet. L'invention permet également de prédire une coupure et le cas échéant de stopper la transmission du paquet en vue de libérer des ressources.

Ces différentes fonctionnalités permettent à un réseau coopératif mettant en oeuvre le procédé selon l'invention de présenter des performances accrues par rapport aux protocoles demandant une retransmission persistante de tous les noeuds, ou des protocoles qui se basent sur des critères moins optimaux pour choisir les noeuds de retransmission et le type de données.

Ces gains de performances peuvent être observés en termes de rendement de codage canal moyen (proportionnel directement au nombre moyen de retransmissions effectuées) et en termes de débit moyen normalisé. Ce débit est le produit du rendement de codage moyen par la probabilité de recevoir un paquet correct. Ce débit traduit directement le débit d'information décodée correctement que le système peut atteindre:

- à très faible ratio signal sur bruit (RSB), l'invention n'apporte pas systématiquement des gains en débit normalisé car le taux d'erreur reste très élevé. Cependant elle apporte des gains conséquents en rendement de codage moyen : la prédiction de coupure prévient des retransmissions inutiles et la ressource temporelle et/ou spectrale est préservée.
- à RSB moyen, l'invention apporte des gains en débit normalisé, surtout dus au fait que les fluctuations des canaux de propagation de chaque lien sont bien estimées et que les retransmissions sont donc redirigées sur les meilleurs liens, ce qui permet d'obtenir autant de décodages corrects mais avec moins de ressources, d'où un débit plus élevé.

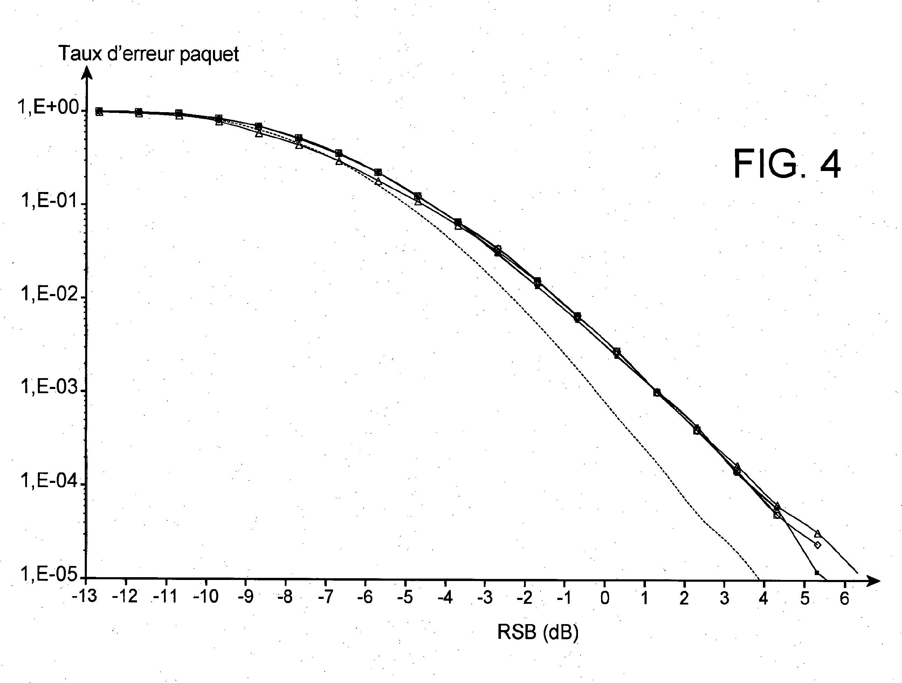

Les figures 4-6 illustrent les avantages de l'invention. Elles sont issues de résultats de simulations dans lesquels le codage, l'HARQ et le processus de décision de retransmission sont simulés de manière identique à la réalité. En revanche, en ce qui concerne les parties modulation et canal de propagation, celles-ci sont également modélisées et ne reflètent donc pas exactement une réalisation in-situ qui rendrait compte des dégradations dues aux pertes d'implémentation des parties modulations et radio-fréquence et des pertes dues aux canaux de propagation. Cependant ces pertes se traduiraient par un décalage en termes de rapport signal à bruit qui affecterait de manière identique tous les systèmes étudiés ici (état de l'art et invention). Ainsi les comparaisons de performances présentées ci-après doivent rester valides.

Dans ces simulations, le canal est supposé constant pendant toute la durée des processus de retransmissions. Le lien Source vers Relais est simulé de manière réaliste, avec un RSB constant et non-dépendant des RSB des deux autres liens. Les trois liens du système sont modélisés par des canaux à évanouissement à 4 états par bloc statistiquement indépendants, sélectifs en fréquence, et régis par une loi de Rayleigh. Des codeurs récursifs systématiques convolutifs de rendement 1/2, à 16 états et de polynôme générateur $(23,35)_o$ sont utilisés à la source et au relais. La taille des blocs d'information est de 400 bits. Le turbo-décodeur utilisé à la destination est de type Max-Log-MAP avec un nombre maximal d'itération de 12. Un scénario de RSB asymétriques est considéré dans lequel le RSB moyen sur le lien relais-destination est 10dB meilleur que celui du lien source-destination.

Les performances sont évaluées en termes de :

- Taux d'Erreur Paquet (TEP) résiduel (après le nombre de retransmissions utilisées) ;
- rendement de codage moyen (en d'autres termes le rendement du codeur initial (1/2) pondéré par le nombre moyen de retransmission au RSB considéré) ;
- débit normalisé : produit du rendement moyen de codage par 1 moins le TEP résiduel.

Sur les figures 4-6 illustrent les performances de différents systèmes :

- Courbe en ligne pointillée: considéré comme « état de l'art », ce système sans analyse de la qualité des différents liens demande une retransmission permanente des 2 noeuds, source et relais.
- Courbe en trait plein- marques carrées foncées : ce système implémente le premier mode de réalisation de l'invention, c'est-à-dire sans prévision de coupure totale après le nombre maximal de retransmissions.
- Courbe en trait plein lisse et courbes en traits pleins avec marques claires: ce système implémente le deuxième mode de réalisation de l'invention, c'est-à-dire avec prévision de coupure totale.

Pour les deux premiers systèmes, le lien source vers relais est supposé parfait. Pour le troisième, la courbe en trait plein lisse montre les performances en cas de lien source-relais parfait, et les courbes en traits pleins avec marques claires montrent les performances lorsqu'un lien réel source- relais est simulé, avec différents RSB fixes (20dB, 10dB et 5dB pour les courbes avec marques claires carrées, en forme de losange, en forme de triangle respectivement).

La figure 4 représente le Taux d'Erreur Paquet (TEP) résiduel en fonction du Ratio Signal sur Bruit (RSB) sur les liens menant au terminal destinataire (lien R-D). On peut observer que l'invention n'apporte pas de gain par rapport à la solution de base demandant une retransmission persistante de la source et du relais. Ce n'est pas le but recherché de cette invention.

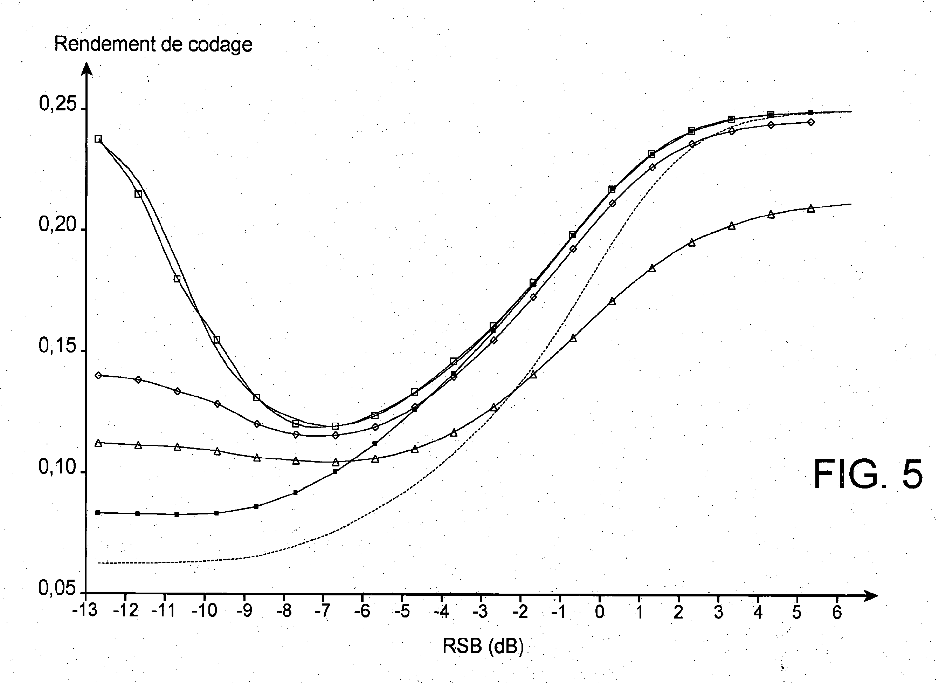

La figure 5 représente le rendement de codage moyen en fonction du RSB sur les liens menant au terminal destinataire. Dans la région des rapports signal-à-bruit faibles, on peut observer que l'invention affiche un rendement moyen beaucoup plus élevé que l'état de l'art, montrant ainsi une quantification visible des transmissions inutiles évitées par le processus avancé mis en oeuvre. Ceci traduit le gain en termes de ressources sauvegardées. Dans la région des rapports signal à bruit moyens, l'invention apporte toujours un gain non négligeable de 1 à 2dB par rapport à la solution de base demandant une retransmission persistante de la source et du relais. On peut ici observer les effets positifs d'une décision intelligente sur le choix du(es) noeud(s) de retransmission et le type de données.

La courbe en trait plein lisse donne les performances de l'invention dans le cas où le lien source-relais est idéal. Cette courbe peut donc être comparée à celle en trait pointillé, simulant aussi un lien source-relais idéal. En observant les courbes à marques claires, nous pouvons aussi observer que l'invention dans un contexte source-relais réel fonctionne toujours mieux que le système de l'état de l'art dans un contexte source-relais idéal, tant que le rapport signal à bruit de ce lien est supérieur à 10dB.

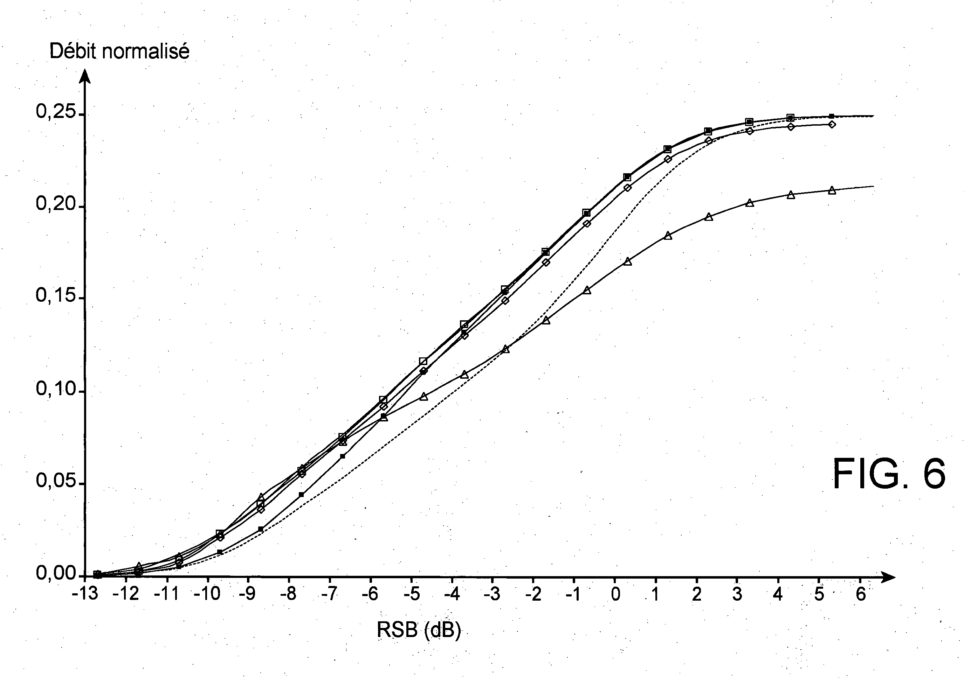

La figure 6 représente le débit normalisé en fonction du RSB. Dans la région des RSB moyens, on observe que l'invention apporte un gain de 1 à 2dB par rapport à la solution de base (courbe en trait pointillé) demandant une retransmission persistante de la source et du relais.

De la même manière qu'à la figure 5, la courbe en trait plein lisse donne les performances de l'invention dans le cas où le lien source-relais est idéal. Cette courbe peut donc être comparée à celle en trait pointillé, simulant aussi un lien source-relais idéal. En regardant les courbes à marques claires, nous pouvons aussi observer que l'invention dans un contexte source-relais réel fonctionne toujours mieux que le système de l'état de l'art dans un contexte source-relais idéal, tant que le rapport signal à bruit de ce lien est supérieur à 10dB.

L'invention n'est pas limitée au procédé précédemment décrit, mais elle s'étend également à un réseau coopératif de communication tel que défini par la revendication 10.

Et l'invention s'étend également à un terminal destinataire tel que défini par la revendication 11.

**Revendications**

1. Procédé de transmission d'une séquence composée d'une pluralité de paquets de données dans un réseau coopératif comprenant une pluralité de noeuds dont un terminal source (S), un terminal destinataire (D) et un terminal relais (R), comprenant :

   - dans une première transmission (T1), la transmission des données d'un paquet par le terminal source (S) à la fois au terminal relais (R) et au terminal destinataire (D) ;
   - en cas d'échec (N1) du décodage des données du paquet de la première transmission par le terminal destinataire (D), et en cas de succès (O2) du décodage des données de la première transmission par le terminal relais (R), la transmission par le terminal
   - relais, dans une deuxième transmission (T2), des données du paquet au terminal destinataire ;
   - en cas d'échec (N3) du décodage des données du paquet de la deuxième transmission (T2) par le terminal destinataire, la sélection du terminal source et/ou du terminal relais pour retransmettre, dans une troisième transmission (T3), les données du paquet au terminal destinataire, ladite sélection étant basée sur une évaluation de la fiabilité pour ladite troisième transmission du canal de transmission entre le terminal source et le terminal destinataire et du canal de transmission entre le terminal relais et le terminal destinataire, ladite évaluation comprenant l'estimation d'une probabilité de coupure de chacun desdits canaux dé transmission lorsque le terminal relais et/où le terminal source sont sélectionnés pour la retransmission, dans la troisième transmission (T3), des données du paquet au terminal destinataire, une coupure d'un canal de transmission étant détectée lorsque l'information mutuelle instantanée de ce canal est inférieure au débit binaire à transmettre sur ce canal ;
   dans lequel le réseau coopératif met en oeuvre un encodage distribué selon lequel le terminal source (S) met en oeuvre un encodage des données du paquet de la première transmission (T1) à l'aide d'un premier encodeur (CC1), et selon lequel en cas de succès (O2) du décodage des données du paquet de la première transmission (T1) par le terminal relais (R), le terminal relais (R) entrelace les données décodées pour former un paquet de données entrelacées et met en oeuvre un encodage dudit paquet de données entrelacées à l'aide d'un second encodeur (CC2) en vue de la deuxième transmission (T2) des données du paquet ;
   dans lequel en cas d'échec (N3, N4) du décodage, par le terminal destinataire, des données du paquet de la deuxième transmission (T2) ou des données du paquet de la troisième transmission (T3), le terminal destinataire génère et transmet au terminal source et au terminal relais un message d'infirmation du décodage (NACK) indiquant qui du terminal relais et/ou du terminal source est sélectionné pour la retransmission, dans une troisième transmission, des données du paquet au terminal destinataire, ledit message d'infirmation du décodage (NACK) indiquant également si les données du paquet à retransmettre dans une troisième transmission (T3) sont les données du paquet de la première transmission (T1) ou les données du paquet de la deuxième transmission (T2) ; dans lequel en cas d'échec (N4) du décodage des données du paquet de la troisième transmission (T3) par le terminal destinataire, la sélection du terminal source et/ou du terminal relais et la troisième transmission sont réitérées, et lorsque lesdites sélection et troisième transmission ont été réitérées un nombre fini de fois (Rmax-R1); on abandonne la transmission des données dudit paquet et on passe au paquet de données suivant dans ladite séquence ; et
   dans lequel ladite évaluation comprend l'estimation d'une probabilité de coupure pour le nombre fini (Rmax-R1) de troisièmes transmissions dans le cas où le terminal relais et le terminal source sont sélectionnés pour la retransmission, dans une troisième transmission (T3), des données du paquet au terminal destinataire, une coupure d'un canal de transmission étant détectée lorsque l'information mutuelle instantanée comprenant le nombre fini (Rmax-R1) de retransmissions à venir sur le canal de transmission entre le terminal source et le terminal destinataire et sur le canal de transmission entre le terminal relais et le terminal destinataire est inférieure au débit binaire à transmettre sur le canal.

2. Procédé selon la revendication 1, dans lequel en cas d'échec (N2) du décodage des données du paquet de la première transmission par le terminal relais (R), le terminal source réitère la première transmission (T1), et lorsque ladite première transmission a été réitérée un premier nombre fini de fois (R1), on abandonne la transmission des données dudit paquet et on passe au paquet de données suivant dans ladite séquence.

3. Procédé selon l'une des revendications 1 et 2, dans lequel lorsque ladite évaluation de la fiabilité des canaux de transmission ne détecte pas une coupure du canal de transmission entre le terminal relais et le terminal destinataire en cas de retransmission uniquement par le terminal relais, le terminal relais (R) est sélectionné pour retransmettre, dans la troisième transmission (T3), les données du paquet au terminal destinataire.

4. Procédé selon l'une des revendications 1 et 2, dans lequel lorsque ladite évaluation de la fiabilité des canaux de transmission détecte une coupure du canal de transmission entre le terminal relais et le terminal destinataire en cas de retransmission uniquement par le terminal relais, et ne détecte pas une coupure du canal de transmission entre le terminal source et le terminal destinataire en cas de retransmission uniquement par le terminal source, le terminal source (S) est sélectionné pour retransmettre, dans la troisième transmission (T3), les données du paquet au terminal destinataire.

5. Procédé selon l'une des revendications 1 et 2, dans lequel lorsque ladite évaluation de la fiabilité des canaux de transmission détecte une coupure du canal de transmission entre le terminal relais et le terminal destinataire en cas de retransmission uniquement par le terminal relais, et une coupure du canal de transmission entre le terminal source et le terminal destinataire en cas de retransmission uniquement par le terminal source, le terminal source (S) et le terminal relais (R) sont sélectionnés pour retransmettre, dans la troisième transmission (T3), les données du paquet au terminal destinataire.

6. Procédé selon l'une des revendications 1 et 2, dans lequel lorsque ladite évaluation de la fiabilité des canaux de transmission détecte une coupure desdits canaux de transmission en cas de retransmission par le terminal source et par le terminal relais, on abandonne la transmission des données dudit paquet et on passe au paquet de données suivant dans ladite séquence.

7. Procédé selon l'une des revendications 1 à 6, dans lequel la détection d'une coupure et la sélection du terminal source et/ou du terminal relais pour retransmettre, dans la troisième transmission, les données du paquet au terminal destinataire sont réalisées par le terminal destinataire.

8. Procédé selon la revendication 1, dans lequel lorsque le terminal relais, respectivement le terminal source, est sélectionné pour retransmettre, dans une troisième transmission (T3), les données du paquet au terminal destinataire, le terminal relais, respectivement le terminal source, retransmet les données du paquet de la deuxième transmission (T2), respectivement de la première transmission (T1).

9. Procédé selon la revendication 1, dans lequel lorsque le terminal relais (R), respectivement le.terminal source (S), est sélectionné pour retransmettre, dans une troisième transmission, les données du paquet au terminal destinataire, le terminal relais, respectivement le terminal source , met en oeuvre un encodage à l'aide du premier codeur (CC1) desdites données du paquet de la première transmission non entrelacées, respectivement un entrelacement desdites données et un encodage desdites données entrelacées à l'aide du second codeur (CC2).

10. Réseau coopératif de communication comprenant une pluralité de noeuds dont un terminal source (S) apte à transmettre une séquence composée d'une pluralité de paquets de données, un terminal destinataire (D) et un terminal relais (R), dans lequel :

   - le terminal source (S) est configuré pour, dans une première transmission (T1), transmettre des données d'un paquet à la fois au terminal relais (R) et au terminal destinataire (D);
   - le terminal relais (R) est configuré pour, en cas d'échec du décodage des données du paquet de la première transmission (T1) par le terminal destinataire et en cas de succès du décodage des données de la première transmission par le terminal relais, transmettre, dans une deuxième transmission (T2), les données du paquet au terminal destinataire ;
   - le terminal destinataire (D) est configuré pour, en cas d'échec du décodage des données du paquet de la deuxième transmission par le terminal destinataire, sélectionner le terminal source et/ou le terminal relais pour retransmettre, dans une troisième transmission (T3), les données du paquet au terminal destinataire, ladite sélection étant basée sur une évaluation de la fiabilité pour ladite troisième transmission du canal de transmission entre le terminal source et le terminal destinataire et du canal de transmission entre le terminal relais et le terminal destinataire, ladite évaluation comprenant l'estimation d'une probabilité de coupure de chacun desdits canaux de transmission lorsque le terminal relais et/ou le terminal source sont sélectionnés pour la retransmission, dans la troisième transmission (T3), des données du paquet au terminal destinataire, une coupure d'un canal de transmission étant détectée lorsque l'information mutuelle instantanée de ce canal est inférieure au débit binaire à transmettre sur ce canal ;
   dans lequel un encodage distribué est mis en oeuvre selon lequel le terminal source (S) est configuré pour mettre en oeuvre un encodage des données du paquet de la première transmission (T1) à l'aide d'un premier encodeur (CC1), et selon lequel en cas de succès (O2) du décodage des données du paquet de la première transmission (T1) par le terminal relais (R), le terminal relais (R) est configuré pour entrelacer les données décodées pour former un paquet de données entrelacées et mettre en oeuvre un encodage dudit paquet de données entrelacées à l'aide d'un second encodeur (CC2) en vue de la deuxième transmission (T2) des données du paquet ;

dans lequel en cas d'échec (N3, N4) du décodage, par le terminal destinataire, des données du paquet de la deuxième transmission (T2) ou des données du paquet de la troisième transmission (T3), le terminal destinataire est configuré pour générer et transmettre au terminal source et au terminal relais un message d'infirmation du décodage (NACK) indiquant qui du terminal relais et/ou du terminal source est sélectionné pour la retransmission, dans une troisième transmission, des données du paquet au terminal destinataire, ledit message d'infirmation du décodage (NACK) indiquant également si les données du paquet à retransmettre dans une troisième transmission (T3) sont les données du paquet de la première transmission (T1) ou les données du paquet de la deuxième transmission (T2) ;

dans lequel en cas d'échec (N4) du décodage des données du paquet de la troisième transmission (T3) par le terminal destinataire, la sélection du terminal source et/ou du terminal relais et la troisième transmission sont réitérées, et lorsque lesdites sélection et troisième transmission ont été réitérées un nombre fini de fois (Rmax-R1), on abandonne la transmission des données dudit paquet et on passe au paquet de données suivant dans ladite séquence ; et

dans lequel ladite évaluation comprend l'estimation d'une probabilité de coupure pour le nombre fini (Rmax-R1) de troisièmes transmissions dans le cas où le terminal relais et le terminal source sont sélectionnés pour la retransmission, dans une troisième transmission (T3), des données du paquet au terminal destinataire, une coupure d'un canal de transmission étant détectée lorsque l'information mutuelle instantanée comprenant le nombre fini (Rmax-R1) de retransmissions à venir sur le canal de transmission entre le terminal source et le terminal destinataire et sur le canal de transmission entre le terminal relais et le terminal destinataire est inférieure au débit binaire à transmettre sur le canal.

11. Terminal destinataire (D) dans un réseau coopératif de communication, apte à recevoir des données d'un terminal source (S) par un premier canal de communication et à recevoir des données d'un terminal relais (R) par un second canal de communication, le terminal source étant configuré pour, dans une première transmission (T1), transmettre des données d'un paquet à la fois au terminal relais et au terminal destinataire, et le terminal relais étant configuré pour, en cas d'échec du décodage des données du paquet de la première transmission par le terminal destinataire et en cas de succès du décodage des données de la première transmission par le terminal relais, transmettre, dans une deuxième transmission (T2), les données du paquet au terminal destinataire,

le réseau coopératif mettant en oeuvre un encodage distribué selon lequel le terminal source (S), met en oeuvre un encodage des données du paquet de la première transmission (T1) à l'aide d'un premier encodeur (CC1), et selon lequel en cas de succès (O2) du décodage des données du paquet de la première transmission (T1) par le terminal relais (R), le terminal relais (R) entrelace les données décodées pour former un paquet de données entrelacées et met en oeuvre un encodage dudit paquet de données entrelacées à l'aide d'un second encodeur (CC2) en vue de la deuxième transmission (T2) des données du paquet, le terminal étant

configuré

pour, en cas d'échec du décodage des données du paquet de la deuxième transmission, sélectionner le terminal source et/ou le terminal relais pour retransmettre, dans une troisième transmission (T3), les données du paquet au terminal destinataire, ladite sélection étant basée sur une évaluation de la fiabilité pour ladite troisième transmission du canal de transmission entre le terminal source et le terminal destinataire et du canal de transmission entre le terminal relais et le terminal destinataire, ladite évaluation comprenant l'estimation d'une probabilité de coupure de chacun desdits canaux de transmission lorsque le terminal relais et/ou le terminal source sont sélectionnés pour la retransmission, dans la troisième transmission (T3), des données du paquet au terminal destinataire, une coupure d'un canal de transmission étant détectée lorsque l'information mutuelle instantanée de ce canal est inférieure au débit binaire à transmettre sur ce canal ; et

pour générer et transmettre au terminal source et au terminal relais un message d'infirmation du décodage (NACK) indiquant qui du terminal relais et/ou du terminal source est sélectionné pour la retransmission, dans une troisième transmission, des données du paquet au terminal destinataire, ledit message d'infirmation du décodage (NACK) indiquant également si les données du paquet à retransmettre dans une troisième transmission (T3) sont les données du paquet de la première transmission (T1) ou les données du paquet de la deuxième transmission (T2) ; et

pour, en cas d'échec du décodage des données du paquet de la troisième transmission, réitérer la sélection du terminal source et/ou du terminal relais pour la troisième transmission au maximum un nombre fini de fois (Rmax-R1), ladite évaluation comprenant l'estimation d'une probabilité de coupure pour le nombre fini (Rmax-R1) de troisièmes transmissions dans le cas où le terminal relais et le terminal source sont sélectionnés pour la retrans-

EP 2 784 967 B1

mission, dans une troisième transmission (T3), des données du paquet au terminal destinataire, une coupure d'un canal de transmission étant détectée lorsque l'information mutuelle instantanée comprenant le nombre fini (Rmax-R1) de retransmissions à venir sur le canal de transmission entre le terminal source et le terminal destinataire et sur le canal de transmission entre le terminal relais et le terminal destinataire est inférieure au débit binaire à transmettre sur le canal.

**Patentansprüche**

1.  Verfahren zur Übertragung einer Sequenz, die aus einer Mehrzahl von Datenpaketen zusammengesetzt ist, in einem kooperativen Netz, umfassend eine Mehrzahl von Knoten, worunter ein Quellenterminal (S), ein Zielterminal (D) und ein Relaisterminal (R), umfassend

    - in einer ersten Übertragung (T1) die Übertragung der Daten eines Pakets durch das Quellenterminal (S) gleichzeitig an das Relaisterminal (R) und an das Zielterminal (D);
    - im Fall des Scheiterns (N1) der Dekodierung der Daten des Pakets der ersten Übertragung durch das Zielterminal (D), und im Fall des Erfolgs (O2) des Dekodierens der Daten der ersten Übertragung durch das Relaisterminal (R), die Übertragung der Daten des Pakets an das Zielterminal durch das Relaisterminal in einer zweiten Übertragung (T2);
    - im Fall des Scheiterns (N3) der Dekodierung der Daten des Pakets der zweiten Übertragung (T2) durch das Zielterminal, die Auswahl des Quellenterminals und/oder des Relaisterminals zur erneuten Übertragung, in einer dritten Übertragung (T3), der Daten des Pakets an das Zielterminal, wobei die Auswahl auf einer Evaluierung der Zuverlässigkeit für die dritte Übertragung des Übertragungskanals zwischen dem Quellenterminal und dem Zielterminal und des Übertragungskanals zwischen dem Relaisterminal und dem Zielterminal basiert, wobei die Evaluierung die Abschätzung einer Wahrscheinlichkeit einer Unterbrechung jedes der Übertragungskanäle umfaßt, wenn das Relaisterminal und/oder das Quellenterminal ausgewählt werden für die erneute Übertragung, in der dritten Übertragung (T3), der Daten des Pakets an das Zielterminal, wobei eine Unterbrechung eines Übertragungskanals detektiert wird, wenn die instantane wechselseitige Information dieses Kanals kleiner ist als die auf diesem Kanal zu übertragende Binärrate;
    wobei das kooperative Netz eine verteilte Kodierung durchführt, gemäß der das Quellenterminal (S) eine Kodierung der Daten des Pakets der ersten Übertragung (T1) mit Hilfe eines ersten Kodierers (CC1) durchführt, und gemäß der im Fall des Erfolgs (O2) der Dekodierung der Daten des Pakets der ersten Übertragung (T1) durch das Relaisterminal (R) das Relaisterminal (R) die dekodierten Daten verschachtelt, um ein Paket von verschachtelten Daten zu bilden, und eine Kodierung des Pakets von verschachtelten Daten mit Hilfe eines zweiten Kodierers (CC2) im Hinblick auf die zweite Übertragung (T2) der Daten des Pakets durchführt;
    wobei im Fall des Scheiterns (N3, N4) der Dekodierung der Daten des Pakets der zweiten Übertragung (T2) oder der Daten des Pakets der dritten Übertragung (T3) durch das Zielterminal das Zielterminal eine Dekodierungsaufhebungsnachricht (NACK) generiert und an das Quellenterminal und an das Relaisterminal überträgt, die angibt, welches von dem Relaisterminal und/oder dem Quellenterminal ausgewählt wird für die erneute Übertragung, in einer dritten Übertragung, der Daten des Pakets an das Zielterminal, wobei die Dekodierungsaufhebungsnachricht (NACK) ferner angibt, ob die Daten des in einer dritten Übertragung (T3) erneut zu übertragenden Pakets die Daten des Pakets der ersten Übertragung (T1) oder die Daten des Pakets der zweiten Übertragung (T2) sind;
    wobei im Fall des Scheiterns (N4) der Dekodierung der Daten des Pakets der dritten Übertragung (T3) durch das Zielterminal die Auswahl des Quellenterminals und/oder des Relaisterminals und die dritte Übertragung wiederholt wird, und wenn die Auswahl und dritte Übertragung eine endliche Zahl von Malen (Rmax-R1) wiederholt worden sind, man die Übertragung der Daten des Pakets abbricht und man zum nächsten Datenpaket in der Sequenz weitergeht; und
    wobei die Evaluierung die Abschätzung einer Wahrscheinlichkeit einer Unterbrechung für die begrenzte Zahl (Rmax-R1) von dritten Übertragungen in dem Fall umfaßt, wo das Relaisterminal und das Quellenterminal ausgewählt sind für die erneute Übertragung, in einer dritten Übertragung (T3), der Daten des Pakets an das Zielterminal, wobei eine Unterbrechung eines Übertragungskanals detektiert wird, wenn die wechselseitige instantane Information, umfassend die begrenzte Zahl (Rmax-R1) von erneuten Übertragungen, die stattfinden sollen auf dem Übertragungskanal zwischen dem Quellenterminal und dem Zielterminal und auf dem Übertragungskanal zwischen dem Relaisterminal und dem Zielterminal, kleiner ist als die auf dem Kanal zu übertragende Binärrate.

2.  Verfahren nach Anspruch 1, bei dem im Fall des Scheiterns (N2) der Dekodierung der Daten des Pakets der ersten

EP 2 784 967 B1

Übertragung durch das Relaisterminal (R) das Quellenterminal die erste Übertragung (T1) wiederholt, und wenn die erste Übertragung eine erste begrenzte Zahl von Malen (R1) wiederholt worden ist, man die Übertragung der Daten des Pakets abbricht und man zum nächsten Datenpaket in der Sequenz weitergeht.

3.  Verfahren nach einem der Ansprüche 1 und 2, bei dem dann, wenn die Evaluierung der Zuverlässigkeit der Übertragungskanäle keine Unterbrechung des Übertragungskanals zwischen dem Relaisterminal und dem Zielterminal im Fall der erneuten Übertragung ausschließlich durch das Relaisterminal detektiert, das Relaisterminal (R) ausgewählt wird, um in der dritten Übertragung (T3) die Daten des Pakets an das Zielterminal erneut zu übertragen.

4.  Verfahren nach einem der Ansprüche 1 und 2, bei dem dann, wenn die Evaluierung der Zuverlässigkeit der Übertragungskanäle eine Unterbrechung des Übertragungskanals zwischen dem Relaisterminal und dem Zielterminal im Fall der erneuten Übertragung ausschließlich durch das Relaisterminal detektiert, und keine Unterbrechung des Übertragungskanals zwischen dem Quellenterminal und dem Zielterminal im Fall der erneuten Übertragung ausschließlich durch das Quellenterminal detektiert, das Quellenterminal (S) ausgewählt wird, um in der dritten Übertragung (T3) die Daten des Pakets an das Zielterminal erneut zu übertragen.

5.  Verfahren nach einem der Ansprüche 1 und 2, bei dem dann, wenn die Evaluierung der Zuverlässigkeit der Übertragungskanäle eine Unterbrechung des Übertragungskanals zwischen dem Relaisterminal und dem Zielterminal im Fall der erneuten Übertragung ausschließlich durch das Relaisterminal detektiert, und eine Unterbrechung des Übertragungskanals zwischen dem Quellenterminal und dem Zielterminal im Fall der erneuten Übertragung ausschließlich durch das Quellenterminal detektiert, das Quellenterminal (S) und das Relaisterminal (R) ausgewählt werden, um in der dritten Übertragung (T3) die Daten des Pakets an das Zielterminal erneut zu übertragen.

6.  Verfahren nach einem der Ansprüche 1 und 2, bei dem dann, wenn die Evaluierung der Zuverlässigkeit der Übertragungskanäle eine Unterbrechung der Übertragungskanäle im Fall der erneuten Übertragung durch das Quellenterminal und durch das Relaisterminal detektiert, man die Übertragung der Daten des Pakets abbricht und man zum nächsten Datenpaket in der Sequenz weitergeht.

7.  Verfahren nach einem der Ansprüche 1 bis 6, bei dem die Detektion einer Unterbrechung und die Auswahl des Quellenterminals und/oder des Relaisterminals zur erneuten Übertragung der Daten des Pakets an das Zielterminal in der dritten Übertragung durch das Zielterminal durchgeführt werden.

8.  Verfahren nach Anspruch 1, bei dem dann, wenn das Relaisterminal bzw. das Quellenterminal ausgewählt wird, um in einer dritten Übertragung (T3) die Daten des Pakets an das Zielterminal erneut zu übertragen, das Relaisterminal bzw. das Quellenterminal die Daten des Pakets der zweiten Übertragung (T2) bzw. der ersten Übertragung (T1) erneut überträgt.

9.  Verfahren nach Anspruch 1, bei dem dann, wenn das Relaisterminal (R) bzw. das Quellenterminal (S) ausgewählt wird, um in einer dritten Übertragung die Daten des Pakets an das Zielterminal erneut zu übertragen, das Relaisterminal bzw. das Quellenterminal eine Kodierung der nicht verschachtelten Daten des Pakets der ersten Übertragung mit Hilfe des ersten Kodierers (CC1) bzw. eine Verschachtelung der Daten und eine Kodierung der verschachtelten Daten mit Hilfe des zweiten Kodierers (CC2) durchführt.

10. Kooperatives Kommunikationsnetz, umfassend eine Mehrzahl von Knoten, worunter ein Quellenterminal (S), das dazu ausgelegt ist, eine Sequenz zu übertragen, die aus einer Mehrzahl von Datenpaketen zusammengesetzt ist, ein Zielterminal (D) und eine Relaisterminal (R), bei dem:

- das Quellenterminal (S) dazu ausgelegt ist, in einer ersten Übertragung (T1) Daten eines Pakets gleichzeitig an das Relaisterminal (R) und an das Zielterminal (D) zu übertragen;
- das Relaisterminal (R) dazu ausgelegt ist, im Fall des Scheiterns der Dekodierung der Daten des Pakets der ersten Übertragung (T1) durch das Zielterminal und im Fall des Erfolgs der Dekodierung der Daten der ersten Übertragung durch das Relaisterminal in einer zweiten Übertragung (T2) die Daten des Pakets an das Zielterminal zu übertragen;
- das Zielterminal (D) dazu ausgelegt ist, im Fall des Scheiterns der Dekodierung der Daten des Pakets der zweiten Übertragung durch das Zielterminal das Quellenterminal und/oder das Relaisterminal auszuwählen, um in einer dritten Übertragung (T3) die Daten des Pakets an das Zielterminal erneut zu übertragen, wobei die Auswahl auf einer Evaluierung der Zuverlässigkeit, für die dritte Übertragung, des Übertragungskanals zwischen dem Quellenterminal und dem Zielterminal und des Übertragungskanals zwischen dem Relaisterminal und dem Zielterminal basiert, wobei die Evaluierung die Abschätzung einer Wahrscheinlichkeit einer Unterbrechung jedes der Übertragungskanäle umfaßt, wenn das Relaisterminal und/oder das Quellenterminal ausgewählt werden für die erneute Übertragung, in der dritten Übertragung (T3), der Daten des Pakets an das Zielterminal, wobei eine Unterbrechung eines Übertragungskanals detektiert wird, wenn die wechselseitige instantane Information dieses Kanals kleiner ist als die auf diesem Kanal zu übertragende Binärrate;

wobei eine verteilte Kodierung durchgeführt wird, gemäß der das Quellenterminal (S) dazu ausgelegt ist, eine Kodierung der Daten des Pakets der ersten Übertragung (T1) mit Hilfe eines ersten Kodierers (CC1) durchzuführen, und gemäß der im Fall des Erfolgs (O2) der Dekodierung der Daten des Pakets der ersten Übertragung (T1) durch das Relaisterminal (R) das Relaisterminal (R) dazu ausgelegt ist, die dekodierten Daten zu verschachteln, um ein Paket von verschachtelten Daten zu bilden und eine Kodierung des Pakets von verschachtelten Daten mit Hilfe eines zweiten Kodierers (CC2) im Hinblick auf die zweite Übertragung (T2) der Daten des Pakets durchzuführen;

wobei im Fall des Scheiterns (N3, N4) der Dekodierung der Daten des Pakets der zweiten Übertragung (T2) oder der Daten des Pakets der dritten Übertragung (T3) durch das Zielterminal das Zielterminal dazu ausgelegt ist, eine Dekodierungsaufhebungsnachricht (NACK) zu generieren und an das Quellenterminal und an das Relaisterminal zu übertragen, die angibt, welches von dem Relaisterminal und/oder dem Quellenterminal ausgewählt wird für die erneute Übertragung, in einer dritten Übertragung, der Daten des Pakets an das Zielterminal, wobei die Dekodierungsaufhebungsnachricht (NACK) ferner angibt, ob die Daten des in einer dritten Übertragung (T3) erneut zu übertragenden Pakets die Daten des Pakets der ersten Übertragung (T1) oder die Daten des Pakets der zweiten Übertragung (T2) sind;

wobei im Fall des Scheiterns (N4) der Dekodierung der Daten des Pakets der dritten Übertragung (T3) durch das Zielterminal die Auswahl des Quellenterminals und/oder des Relaisterminals und die dritte Übertragung wiederholt wird, und wenn die Auswahl und dritte Übertragung eine endliche Zahl von Malen (Rmax-R1) wiederholt worden sind, man die Übertragung der Daten des Pakets abbricht und man zum nächsten Datenpaket in der Sequenz weitergeht; und

wobei die Evaluierung die Abschätzung einer Wahrscheinlichkeit einer Unterbrechung für die begrenzte Zahl (Rmax-R1) von dritten Übertragungen in dem Fall umfaßt, wo das Relaisterminal und das Quellenterminal ausgewählt sind für die erneute Übertragung, in einer dritten Übertragung (T3), der Daten des Pakets an das Zielterminal, wobei eine Unterbrechung eines Übertragungskanals detektiert wird, wenn die wechselseitige instantane Information, umfassend die begrenzte Zahl (Rmax-R1) von erneuten Übertragungen, die stattfinden sollen auf dem Übertragungskanal zwischen dem Quellenterminal und dem Zielterminal und auf dem Übertragungskanal zwischen dem Relaisterminal und dem Zielterminal, kleiner ist als die auf dem Kanal zu übertragende Binärrate.

**11.** Zielterminal (D) in einem kooperativen Kommunikationsnetz, das dazu ausgelegt ist, Daten eines Quellenterminals (S) über einen ersten Kommunikationskanal zu empfangen, und Daten eines Relaisterminals (R) über einen zweiten Kommunikationskanal zu empfangen, wobei das Quellenterminal dazu ausgelegt ist, in einer ersten Übertragung (T1) Daten eines Pakets gleichzeitig an das Relaisterminal und an das Zielterminal zu übertragen, und wobei das Relaisterminal dazu ausgelegt ist, im Fall des Scheiterns der Dekodierung der Daten des Pakets der ersten Übertragung durch das Zielterminal und im Fall des Erfolgs der Dekodierung der Daten der ersten Übertragung durch das Relaisterminal in einer zweiten Übertragung (T2) die Daten des Pakets an das Zielterminal zu übertragen,

wobei das kooperative Netz eine verteilte Kodierung durchführt, gemäß der das Quellenterminal (S) eine Kodierung der Daten des Pakets der ersten Übertragung (T1) mit Hilfe eines ersten Kodierers (CC1) durchführt, und gemäß der im Fall des Erfolgs (O2) der Dekodierung der Daten des Pakets der ersten Übertragung (T1) durch das Relaisterminal (R) das Relaisterminal (R) die dekodierten Daten verschachtelt, um ein Paket von verschachtelten Daten zu bilden, und eine Kodierung des Pakets von verschachtelten Daten mit Hilfe eines zweiten Kodierers (CC2) im Hinblick auf die zweite Übertragung (T2) der Daten des Pakets durchführt,

wobei das Terminal dazu ausgelegt ist, im Fall des Scheiterns der Dekodierung der Daten des Pakets der zweiten Übertragung das Quellenterminal und/oder das Relaisterminal auszuwählen, um in einer dritten Übertragung (T3) die Daten des Pakets erneut an das Zielterminal zu übertragen, wobei die Auswahl auf einer Evaluierung der Zuverlässigkeit, für die dritte Übertragung, des Übertragungskanals zwischen dem Quellenterminal und dem Zielterminal und des Übertragungskanals zwischen dem Relaisterminal und dem Zielterminal basiert, wobei die Evaluierung die Abschätzung einer Wahrscheinlichkeit einer Unterbrechung jedes der Übertragungskanäle umfaßt, wenn das Relaisterminal und/oder das Quellenterminal ausgewählt werden für die erneute Übertragung, in der dritten Übertragung (T3), der Daten des Pakets an das Zielterminal, wobei eine Unterbrechung eines Übertragungskanals detektiert wird, wenn die wechselseitige instantane Information dieses Kanals kleiner ist als die auf diesem Kanal zu übertragende Binärrate; und

ferner dazu ausgelegt ist, eine Dekodierungsaufhebungsnachricht (NACK) zu generieren und an das Quellenterminal und an das Relaisterminal zu übertragen, die angibt, welches von dem Relaisterminal und/oder dem Quellenterminal für die erneute Übertragung, in einer dritten Übertragung, der Daten des Pakets zu dem Zielterminal ausgewählt wird, wobei die Dekodierungsaufhebungsnachricht (NACK) ferner angibt, ob die Daten des in einer dritten Übertragung (T3) erneut zu übertragenden Pakets die Daten des Pakets der ersten Übertragung (T1) oder die Daten des Pakets der zweiten Übertragung (T2) sind; und

ferner dazu ausgelegt ist, im Fall des Scheiterns der Dekodierung der Daten des Pakets der dritten Übertragung die Auswahl des Quellenterminals und/oder des Relaisterminals für die dritte Übertragung höchstens eine begrenzte Zahl von Malen (Rmax-R1) zu wiederholen, wobei die Evaluierung die Abschätzung einer Wahrscheinlichkeit einer Unterbrechung für die begrenzte Zahl (Rmax-R1) von dritten Übertragungen in dem Fall umfaßt, wo das Relaisterminal und das Quellenterminal für die erneute Übertragung, in einer dritten Übertragung (T3), der Daten des Pakets an das Zielterminal ausgewählt werden, wobei eine Unterbrechung eines Übertragungskanals detektiert wird, wenn die wechselseitige instantane Information, umfassend die begrenzte Zahl (Rmax-R1) von erneuten Übertragungen, die auf dem Übertragungskanal zwischen dem Quellenterminal und dem Zielterminal und auf dem Übertragungskanal zwischen dem Relaisterminal und dem Zielterminal erfolgen sollen, kleiner ist als die auf dem Kanal zu übertragende binäre Rate.

## Claims

1. Method for the transmission of a sequence made up of multiple data packets in a cooperative network comprising multiple nodes, including a source terminal (S), a destination terminal (D) and a relay terminal (R), comprising:

   - in a first transmission (T1), the transmission of the data of a packet by the source terminal (S) to both the relay terminal (R) and the destination terminal (D) ;
   - in the event of failure (N1) of the destination terminal (D) to successfully decode the data in the packet of the first transmission, and in the case of the data of the first transmission being successfully (O2) decoded by the relay terminal (R), the relay terminal transmits the data of the packet to the destination terminal in a second transmission (T2);
   - in the event of failure (N3) of the destination terminal to decode the data in the packet of the second transmission (T2), the selection of the source terminal and/or of the relay terminal to retransmit the data of the packet to the destination terminal in a third transmission (T3), wherein said selection is based on an assessment of the reliability for said third transmission of the transmission channel between the source terminal and the destination terminal and of the transmission channel between the relay terminal and the destination terminal, said assessment including the estimation of a probability of outage of each of said transmission channels when the relay terminal and/or source terminal are selected for the retransmission of the data of the packet to the destination terminal in the third transmission (T3), an outage in a transmission channel being detected when the instantaneous mutual information for this channel is less than the bitrate to be transmitted on this channel.;

   wherein the cooperative network implements a distributed encoding, according to which the source terminal (S) implements encoding of the data of the packet of the first transmission (T1) using a first encoder (CC1), and according to which in the event of successful (O2) decoding of the data of the packet of the first transmission (T1) by the relay terminal (R), the relay terminal (R) interlaces the decoded data to form an interlaced data packet and implements an encoding of said interlaced data packet using a second encoder (CC2) for the purposes of the second transmission (T2) of the data of the packet;

   wherein in the event of unsuccessful decoding (N3, N4) by the destination terminal of the data of the packet in the second transmission (T2) or of the data of the packet of the third transmission (T3), the destination terminal generates and transmits to the source terminal and to the relay terminal a message for disconfirming the decoding (NACK) indicating which of the relay terminal and/or of the source terminal is selected for the retransmission, in a third transmission, of the data of the packet to the destination terminal, said disconfirming message (NACK) also indicating whether the data of the packet to be retransmitted in a third transmission (T3) are data from the packet of the first transmission (T1) or data from the packet of the second transmission (T2);

   wherein in the event of the unsuccessful decoding (N4) of the data in the packet of the third transmission by the destination terminal, the selection of the source terminal and/or of the relay terminal and the third transmission are reiterated, and when said selection and third transmission have been reiterated a finite number of times (Rmax-R1), the transmission of the data of said packet is abandoned and one moves onto the next packet of data in said sequence; and

   wherein said assessment of the reliability of the transmission channels includes the estimation of a probability of outage for the finite number (Rmax-R1) of third transmissions in the event of the relay terminal and the source terminal are selected for the retransmission, in a third retransmission (T3) of the data of the packet to the destination terminal, an outage of a transmission channel being detected when the instantaneous mutual information comprising the finite number (Rmax-R1) of retransmissions to come on the transmission channel between the source terminal and the destination terminal and on the transmission channel between the relay terminal and the destination terminal is less than the bitrate to be transmitted on this channel.

2. Method according to claim 1, wherein in the event of the unsuccessful decoding (N2) of the data in the packet of the first transmission by the relay terminal (R), the source terminal reiterates the first transmission (T1), and when said first transmission has been reiterated a first finite number of times (R1), the transmission of data of said packet is abandoned and one moves onto the next packet of data in said sequence.

3. Method according to one of claims 1 and 2, wherein when said assessment of the reliability of the transmission channels does not detect an outage of the transmission channel between the relay terminal and the destination terminal in the event of retransmission only by the relay terminal, the relay terminal (R) is selected to retransmit the data in the packet to the destination terminal in the third transmission (T3).

4. Method according to one of claims 1 and 2, wherein when said assessment of the reliability of transmission channels detects an outage of the transmission channel between the relay terminal and the destination terminal in the event of retransmission only by the relay terminal, and does not detect an outage in the transmission channel between the source terminal and the destination terminal in the event of retransmission only by the source terminal, the source terminal (S) is selected to retransmit the data in the packet to the destination terminal in the third transmission (T3).

5. Method according to one of claims 1 and 2, wherein when said assessment of the reliability of transmission channels detects an outage of the transmission channel between the relay terminal and the destination terminal in the event of retransmission only by the relay terminal, and an outage in the transmission channel between the source terminal and the destination terminal in the event of retransmission only by the source terminal, the source terminal (S) and the relay terminal (R) are selected to retransmit the data in the packet to the destination terminal in the third transmission (T3).

6. Method according to one of claims 1 and 2, wherein when said assessment of the reliability of the transmission channels detects an outage of said transmission channels in the case of retransmission by the source terminal and by the relay terminal, the transmission of data of said packet is abandoned and one moves on to the next data packet in said sequence.

7. Method according to one of claims 1 to 6, wherein the detection of an outage and the selection of the source terminal and/or of the relay terminal in order to retransmit the data in the packet to the destination terminal in the third transmission are carried out by the destination terminal.

8. Method according to claim 1, wherein when the relay terminal, or the source terminal respectively, is selected in order to retransmit the data in the packet to the destination terminal in a third transmission (T3), the relay terminal, and the source terminal respectively, retransmits the data in the packet of the second transmission (T2), and of first transmission (T1) respectively.

9. Method according to claim 1, wherein when the relay terminal (R), and the source terminal (S) respectively, is selected in order to retransmit the data in the packet to the destination terminal in a third transmission, the relay terminal, and the source terminal respectively, implements an encoding using the first encoder (CC1) of said data in the packet of the first non-interlaced transmission, and an interlacing of said data and encoding of said interlaced data using said second encoder (CC2) respectively.

10. Cooperative communication network comprising multiple nodes including a source terminal (S) suitable for transmitting a sequence comprising multiple data packets, a destination terminal (D) and a relay terminal (R), wherein:

- the source terminal (S) is configured in order to, in a first transmission (T1), transmit data of a packet to both the relay terminal (R) and the destination terminal (D);
- the relay terminal (R) is configured so that in the event of failure of the destination terminal to successfully decode the data in the packet of the first transmission (T1), and in the case of the data of the first transmission being successfully decoded by the relay terminal, the relay terminal transmits the packet's data to the destination terminal in a second transmission (T2);

- the destination terminal (D) is configured so that in the event of failure of the destination terminal to successfully decode the data in the packet of the second transmission, it selects the source terminal and/or the relay terminal to retransmit the data of the packet to the destination terminal in a third transmission (T3), wherein said selection is based on an assessment of the reliability for said third transmission of the transmission channel between the source terminal and the destination terminal and of the transmission channel between the relay terminal and the destination terminal, said assessment including the estimation of a probability of outage of each of said transmission channels when the relay terminal and/or source terminal are selected for the retransmission of the data of the packet to the destination terminal in the third transmission (T3), an outage in a transmission channel being detected when the instantaneous mutual information for this channel is less than the bitrate to be transmitted on this channel;

wherein a distributed coding is implemented according to which the source terminal (S) is configured to implement an encoding of the data in the packet of the first transmission (T1) using a first encoder (CC1), and according to which in the event of successful decoding (O2) of the data of the packet of the first transmission (T1) by the relay terminal (R), the relay terminal (R) is configured to interlace the decoded data to form an interlaced data packet and to implement an encoding of said interlaced data packet using a second encoder (CC2) for the purposes of the second transmission (T2) of the packet data; and

wherein in the event of unsuccessful decoding (N3, N4) by the destination terminal of the data in the packet in the second transmission (T2) or of the data in the packet of the third transmission (T3), the destination terminal is configured to generate and transmit to the source terminal and to the relay terminal a message for disconfirming of the decoding (NACK) indicating which of the relay terminal and/or of the source terminal is selected for the retransmission, in a third transmission, of the packet data to the destination terminal, said disconfirming message (NACK) indicating also whether the data in the packet to be retransmitted in a third transmission (T3) are data from the packet of the first transmission (T1) or data from the packet of the second transmission (T2);

wherein in the event of the unsuccessful decoding (N4) of the data in the packet of the third transmission by the destination terminal, the selection of the source terminal and/or of the relay terminal and the third transmission are reiterated, and when said selection and third transmission have been reiterated a finite number of times (Rmax-R1), the transmission of the data of said packet is abandoned and one moves onto the next packet of data in said sequence; and

wherein said assessment of the reliability of the transmission channels includes the estimation of a probability of outage for the finite number (Rmax-R1) of third transmissions in the event of the relay terminal and the source terminal are selected for the retransmission, in a third retransmission (T3) of the data of the packet to the destination terminal, an outage of a transmission channel being detected when the instantaneous mutual information comprising the finite number (Rmax-R1) of retransmissions to come on the transmission channel between the source terminal and the destination terminal and on the transmission channel between the relay terminal and the destination terminal is less than the bitrate to be transmitted on this channel.

11. Destination terminal (D) in a cooperative communication network, suitable for receiving data from a source terminal (S) through a first communication channel and for receiving data from a relay terminal (R) through a second communication channel, where the source terminal is configured to transmit data of a packet in a first transmission (T1) to both the relay terminal and the destination terminal, where the relay terminal is configured, in the event of the destination terminal failing to successfully decode the data in the packet of the first transmission, and in the event of the relay terminal successfully decoding the data in the first transmission, to transmit the data in the packet to the destination terminal in a second transmission (T2),

where the cooperative network implements a distributed encoding, according to which the source terminal (S) implements encoding of the data of the packet of the first transmission (T1) using a first encoder (CC1), and according to which in the event of successful (02) decoding of the data of the first packet of the first transmission (T1) by the relay terminal (R), the relay terminal (R) interlaces the decoded data to form an interlaced data packet and implements an encoding of the said interlaced data packet using a second encoder (CC2) for the purposes of the second transmission (T2) of the packet data,

the terminal being configured in the event of unsuccessful decoding of the data of the packet of the second transmission:

to select the source terminal and/or relay terminal to retransmit the data of the packet to the destination terminal, in a third transmission (T3), wherein said selection is based on an assessment of the reliability for said third transmission of the transmission channel between the source terminal and the destination terminal and of the transmission channel between the relay terminal and the destination terminal, said assessment including the estimation of a probability of outage of each of said transmission channels when the relay terminal and/or source terminal are selected for the retransmission of the data of the packet to the destination terminal in the third transmission (T3), an outage in a transmission channel being detected when the instantaneous mutual information for this channel is less than the bitrate to be transmitted on this channel; and

to generate and transmit to the source terminal and to the relay terminal, a decoding disconfirming message (NACK) which indicates which of the relay terminal and/or of the source terminal is selected for the retransmission of the data of the packet to the destination terminal in a third transmission, said decoding message (NACK) also indicating whether the data of the packet to be retransmitted in a third transmission (T3) are the data of the packet of the first transmission (T1) or the data of the packet of the second transmission (T2); and

in the event of the unsuccessful decoding (N4) of the data in the packet of the third transmission, to reiterate the selection of the source terminal and/or of the relay terminal for the third transmission at most a finite number of times (Rmax-R1), wherein said assessment includes the estimation of a probability of outage for the finite number (Rmax-R1) of third transmissions in the event of the relay terminal and the source terminal are selected for the retransmission, in a third retransmission (T3) of the data of the packet to the destination terminal, an outage of a transmission channel being detected when the instantaneous mutual information comprising the finite number (Rmax-R1) of retransmissions to come on the transmission channel between the source terminal and the destination terminal and on the transmission channel between the relay terminal and the destination terminal is less than the bitrate to be transmitted on this channel.

FIG. 1

FIG. 2

FIG. 3

FIG. 4

EP 2 784 967 B1

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008024158 A
- WO 2012109725 A2
- US 2008155148 A1

**Littérature non-brevet citée dans la description**

- **K. PANG.** Collaborative HARQ Schemes for Cooperative Diversity Communications in Wireless Networks. *Master Thesis,* 2008, http://ses.library.usyd.edu.au/handle/2123/2559
- **E. BIGLIERI et al.** Fading channels information-theoretic and communication aspects. *IEEE Trans. on Information Theory,* Octobre 1998, vol. 44 (6), 2619-2692